# EUROPÄISCHE PATENTSCHRIFT

(11) **EP 4 140 677 B1**
(45) Veröffentlichungstag und Bekanntmachung des Hinweises auf die Patenterteilung: **09.10.2024**
(21) Anmeldenummer: 22190599.5
(22) Anmeldetag: 16.08.2022
(51) Int. Cl.: B25B 13/06, B25G 1/06, B29C 48/08, B29C 48/31, B25B 23/10

(54) **SCHLÜSSELAUFSATZ**
WRENCH COUPLING
EMBOUT DE CLÉ

(30) Priorität: 31.08.2021 DE 102021122528
(43) Veröffentlichungstag der Anmeldung: 01.03.2023
(73) Patentinhaber: MAKU AG, 6374 Buochs (CH)
(72) Erfinder: Maeder, Reto, 6048 Horw (CH)
(74) Vertreter: Rätsch, Caroline

(56) Entgegenhaltungen:
- EP-B1- 2 657 000
- WO-A1-01/28743
- DE-U1- 202021 101 989
- US-A1- 2016 016 294
- US-A1- 2020 282 530

## Beschreibung

Die Erfindung betrifft einen Schlüsselaufsatz für Schrauben.

Aus dem Stand der Technik sind Vorrichtungen zur Herstellung flachbahniger Erzeugnisse mit Hilfe einer Breitschlitzdüse bekannt. Der Spalt der Breitschlitzdüse und/oder deren Staubalken ist mit Hilfe einer Vielzahl von entlang der Quererstreckung der Breitschlitzdüse angeordneten Schrauben einstellbar. Zum Einstellen der Schrauben ist über die volle Breite der Breitschlitzdüse hinweg eine Traverse angeordnet, auf der eine Schraubeinrichtung entlang der Schrauben hin- und herbewegbar ist. Die Einstellung der Höhe des Spaltes der Breitschlitzdüse erfolgt durch das bevorzugt vollautomatische Anziehen oder Lösen der einzelnen Schrauben mittels der Schraubeinrichtung unter Kontrolle einer Steuer- und/oder Regeleinrichtung. Der Begriff der flachbahnigen Erzeugnisse definiert im Kontext der vorliegenden Beschreibung bevorzugt dünne Kunststofffolien.

In der bekannten Vorrichtung wird thermoplastischer Kunststoff zunächst auf eine erhöhte Temperatur gebracht, bis er erweicht. Der hinreichend plastifizierte Kunststoff tritt aus dem Spalt der Breitschlitzdüse aus, der das plastifizierte Material in die gewünschte Folienform bringt. Zur schnellen Abkühlung des Folienmaterials kann stromabwärts nach der Breitschlitzdüse eine Kühlwalzenanordnung vorgesehen sein. Um eine Folienbahn mit einer über die gesamte Breite möglichst homogenen Dicke herzustellen, was insbesondere bei dünnen Folien von Bedeutung ist, wird die Höhe des Spaltes mit Hilfe der durch die Schraubeinrichtung verstellbaren Schrauben kontinuierlich und vollautomatisch angepasst. Hierdurch lassen sich unter anderem temperaturbedingte Änderungen der Spalthöhe der Breitschlitzdüse ausgleichen. Auch im Falle eines Produktwechsels muss der Spalt dem jeweils neuen Erzeugnis angepasst werden. Die Schrauben erfüllen somit sowohl die Funktion einer Feineinstellung als auch die einer Anpassung an unterschiedliche Erzeugnisse. Auch ein Staubalken zur gleichmäßigen Verteilung des erweichten Kunststoffmaterials über die gesamte Breite der Breitschlitzdüse hinweg kann mit Hilfe von Schrauben anpassbar sein, die wiederum bevorzugt mittels der Schraubeinrichtung automatisiert einstellbar sind, wie sie beispielsweise aus der EP 2 657 000 B1 bekannt ist. Weitere Schraubeinrichtungen sind aus den Druckschriften US 2020/282530 A1, DE 20 2021 101989 U1 und WO 01/28743 A1 bekannt.

Die Erfindung ist nicht auf die vorbeschriebenen Vorrichtungen beschränkt. Vielmehr ist sie auch anwendbar auf Blasfolienanlagen oder andere Vorrichtungen, bei denen grundsätzlich der Bedarf besteht, eine Mehrzahl von beabstandeten Schrauben zu betätigen, bevorzugt zur Einstellung eines Spaltes oder einer Düse.

Die vorstehend beschriebene Vorrichtung hat sich bewährt. Allerdings wurde gefunden, dass es insbesondere bei großen Breitschlitzdüsen bei der Ansteuerung der Schrauben teilweise zu Positionierungsungenauigkeiten und/oder Verspannungen kommen kann.

Ausgehend von dem bekannten Stand der Technik liegt der Erfindung die Aufgabe zugrunde, einen Schlüsselaufsatz zu schaffen, der die genannten Nachteile überwindet.

Zur Lösung dieser Aufgabe weist ein erfindungsgemäßer Schlüsselaufsatz für Schrauben einen ersten Wellenabschnitt mit einer ersten Längsachse und einen zweiten Wellenabschnitt mit einer zweiten Längsachse auf. Der erste Wellenabschnitt weist ein freies Ende zur Betätigung der Schrauben auf. Erfindungsgemäß ist der zweite Wellenabschnitt mit dem ersten Wellenabschnitt über eine Kreuzscheibe gekoppelt. Der erste Wellenabschnitt und der zweite Wellenabschnitt sind durch ein Federelement miteinander verbunden, das den ersten Wellenabschnitt in eine Ausgangsstellung ausrichtet, in der die erste Längsachse und die zweite Längsachse koaxial fluchten. In dieser Ausgangsstellung ist der erste Wellenabschnitt unbelastet, also frei von außen angreifenden Kräften.

Das freie Ende kann mit einem profilierten Schlüssel ausgebildet sein. Alternativ kann auf das freie Ende ein profilierter Schlüssel aufgebracht, insbesondere aufgesteckt werden. Hierzu kann das freie Ende ein Aufnahmeprofil aufweisen.

Der Erfindung liegt die Erkenntnis zugrunde, dass die Positionierungsungenauigkeiten und/oder Verspannungen auf thermische Schwankungen der Breitschlitzdüse zurückzuführen sind. Auch Toleranzabweichungen der Breitschlitzdüsenkonstruktion können eine Rolle spielen. Hierbei kann es trotz einer geeigneten Regelung zu einem leichten Achsversatz kommen, wenn der Schlüsselaufsatz die jeweilige Schraube anfährt. Aber auch dann, wenn der Schlüssel die Schraube korrekt getroffen hat, kann es zu Verspannungen zwischen der Schraubeinrichtung und der Schraube kommen, welche zu einem vorzeitigem Verschleiß führen. Teilweise kann der Schlüssel beim Abziehen auch haken. Hier greift die Erfindung ein.

Durch die Erfindung ist eine zuverlässige und präzise Einstellung von Schrauben, insbesondere an einer Breitschlitzdüse und/oder an einem Staubalken einer Vorrichtung zum Herstellen von flachbahnigen Erzeugnissen, gewährleistet. Insbesondere verhindert die Kreuzscheibe ein Verkanten des Schlüsselaufsatzes auf der einzustellenden Schraube. Auch wenn die Schraube leicht achsversetzt zu dem Schlüssel positioniert ist, kann aufgrund der Kreuzscheibe ein spannungsfreies Drehmoment auf die Schraube übertragen werden. Dabei besteht nicht die Gefahr, dass es zu einer ungewollten Schrägstellung des Schlüssels kommt. Es reduzieren sich also die Anforderungen an die Positioniergenauigkeit der Schraubeinrichtung. Dem Federelement kommt dabei die Aufgabe zu, den ersten Wellenabschnitt, dem der Schlüssel zugeordnet ist, nach Betätigung der Schraube wieder in seine Ausgangsstellung zurückzuholen, damit der Schlüssel wieder eine definierte Stellung einnimmt.

Vorzugsweise ist das Federelement innerhalb des ersten und des zweiten Wellenabschnitts angeordnet. Hierdurch ist dieser vor nachteiligen Umgebungseinflüssen gut geschützt. Zusätzlich kann das Federelement auch durch die Kreuzscheibe hindurchgehen, wie es nachfolgend noch näher beschrieben wird.

Gemäß einer vorteilhaften Weiterbildung ist vorgesehen, dass das Federelement als ein vorzugsweise linearer Federstab ausgebildet ist. Eine derartige Ausführungsform gestattet einen einfachen Aufbau des Federelements mit definierten Rückstelleigenschaften. Zudem erfordert ein linearer Federstab lediglich einen geringen radialen Einbauraum.

Bevorzugt weist die Kreuzscheibe eine zentrale Durchgangsöffnung auf, durch die das Federelement hindurchgeht. Das Federelement kann die Kreuzscheibe in axialer Richtung also vollständig durchgreifen. Neben der vorstehend bereits angesprochenen Schutzwirkung hat eine zentrale Anordnung des Federelements auch dynamische Vorteile während des Schraubvorganges.

Eine vorteilhafte Ausführungsform ist dadurch gekennzeichnet, dass die Durchgangsöffnung einen größeren Öffnungsquerschnitt aufweist als der Querschnitt des Federelements, wobei vorzugsweise der Öffnungsquerschnitt rund ausgebildet ist. Die Größe der Durchgangsöffnung der Kreuzscheibe wird man so wählen, dass das Federelement einen radialen Bewegungsspielraum hat. Damit gestattet die Durchgangsöffnung eine radiale Auslenkung der Kreuzscheibe. Der Schlüssel kann also auch Schrauben betätigen, die nicht exakt axial mit dem Schlüssel fluchten.

Vorzugsweise weist der zweite Wellenabschnitt ein rückwärtiges Ende auf, durch das hindurch das Federelement eingesteckt ist. Eine derartige Konstruktion gestattet eine besonders einfache Montage und Demontage des Schlüsselaufsatzes.

Vorteilhafterweise ist das Federelement mit einer Schraube verbunden, die mit dem zweiten Wellenabschnitt in Gewindeeingriff steht. Die Schraube gestattet eine zuverlässige, einseitige Befestigung des Federelements innerhalb des zweiten Wellenabschnitts. Die Schraube ist zweckmäßig an einem Ende des Federelements mit diesem verbunden. Zur Montage wird das Federelement mit seinem anderen (freien) Ende durch den zweiten Wellenabschnitt und die Kreuzscheibe hindurch in den ersten Wellenabschnitt gesteckt. Sodann wird die Schraube mit dem zweiten Wellenabschnitt verschraubt. Zur Sicherung gegen unbeabsichtigtes Lösen kann die Schraube gegen den zweiten Wellenabschnitt durch ein Sicherungsmittel, insbesondere einen Klebstoff wie zum Beispiel Loctite^{®} gesichert werden.

Gemäß einer Weiterbildung der Erfindung weist die Kreuzscheibe auf einer Seite eine erste Feder, die in eine erste Nut des ersten Wellenabschnitts eingreift, und auf einer anderen Seite eine zweite Feder auf, die in eine zweite Nut des zweiten Wellenabschnitts eingreift. Bei der Feder handelt es sich um einen Vorsprung. Vorzugsweise sind die erste und die zweite Feder orthogonal zueinander angeordnet.

Hierdurch ist ein etwaiger radialer Achsversatz zwischen dem Schlüssel und der jeweiligen Schraube ausgleichbar. Gleichzeitig kann der Schlüsselaufsatz ein entsprechendes Drehmoment aufbringen, ohne dass es zu Verspannungen oder einem Verklemmen kommt.

Vorzugsweise greifen die erste und die zweite Feder in den ersten und den zweiten Wellenabschnitt derart formschlüssig ein, dass der erste und der zweite Wellenabschnitt in Richtung der ersten und der zweiten Längsachse zugfest miteinander verbunden sind. Die jeweilige Nut umgreift die jeweilige Feder also so weit, dass die Feder in Richtung der jeweiligen Längsachse auch bei einer Zugkraft in der Nut gehalten wird. Die Zugfestigkeit gestattet es, dass sich der Schlüsselaufsatz nach dem Einstellvorgang von den Köpfen der einzustellenden Schrauben problemlos abziehen lässt.

In Weiterbildung der Erfindung wird vorgeschlagen, dass der zweite Wellenabschnitt in einer Aufnahmeeinheit aufgenommen ist, die einen ersten Befestigungsring und einen zweiten Befestigungsring aufweist, wobei der erste und der zweite Befestigungsring abstandsveränderlich miteinander verbunden sind und auf einer Klemmhülse sitzen, in der der zweite Wellenabschnitt aufgenommen ist. Durch eine Bewegung des ersten Befestigungsrings relativ zu dem zweiten Befestigungsring ändert sich der Durchmesser der Klemmhülse. Hierdurch kann also der zweite Wellenabschnitt drehfest mit einer Antriebswelle eines Aktors, wie eines Getriebes oder eines Motors, verbunden werden. Dies gilt insbesondere dann, wenn der zweite Wellabschnitt an seinem rückwärtigen Ende eine axiale Aufnahme bildet, wie es als besonders bevorzugt angesehen wird. Bei dem rückwärtigen Ende handelt es sich um das freie Ende des zweiten Wellenabschnitts. Die Aufnahme dient zur Aufnahme der vorgenannten Antriebswelle. Im Bereich der Aufnahmeeinheit kann der zweite Wellenabschnitt mindestens einen Schlitz, insbesondere einen Längsschlitz, aufweisen, um eine radiale Querschnittsreduzierung der Aufnahme durch das Anziehen der Klemmhülse zu erleichtern. Gleichermaßen kann der zweite Wellenabschnitt aber auch ohne Schlitz ausgebildet sein. Dann müssen zwar ggf. höhere Kräfte zum Verspannen der Antriebswelle aufgebracht werden. Vorteil einer nichtgeschlitzten Aufnahme ist eine sehr gute Zentrierung der Antriebswelle.

Vorzugsweise weist der erste Wellenabschnitt einen profilierten Schlüssel mit einem endseitigen umlaufenden Zentrierkonus auf. Der Zentrierkonus erleichtert ein zuverlässiges Ansteuern der einzelnen Schrauben erheblich. Selbst bei einem radialen Versatz von Schlüssel zur Schraube sorgt der Zentrierkonus dafür, dass der Schlüssel zuverlässig auf oder in die Schraube auf- oder eingebracht werden kann. Dabei schafft die Kreuzscheibe die erforderliche Flexibilität des Schlüssels. Es wird also eine zuverlässige Selbstzentrierung des profilierten Schlüssels gewährleistet und das automatisierte Aufsetzen oder Einsetzen des Schlüsselaufsatzes auf dem oder in den Kopf einer einzustellenden (Justier-) Schraube beträchtlich erleichtert. An dieser Stelle sei darauf hingewiesen, dass der Schlüssel sowohl auf oder in eine Schraube gesteckt werden kann. Dann ist der Zentrierkonus innen oder außen angeordnet.

Beispielsweise weist der Schlüssel ein mehrkantiges Innenprofil oder ein mehrkantiges Außenprofil auf. Das Innenprofil des Schlüssels kann zum Beispiel als Innensechskant ausgeführt sein. Das Außenprofil kann beispielsweise als Außensechskant oder als Torx^{®}-Profil ausgebildet sein. Andere Profile sind denkbar.

Eine vorteilhafte Ausführungsform der Erfindung ist dadurch gekennzeichnet, dass das Federelement axial verschiebbar und im Wesentlichen radial spielfrei in dem ersten Wellenabschnitt aufgenommen ist. Die axiale Verschiebbarkeit erleichtert die Montage und Demontage des Schlüsselaufsatzes erheblich. Außerdem bleibt das Federelement in axialer Richtung vorzugsweise weitestgehend spannungsfrei, also frei von etwaigen Druckkräften, was die Leichtgängigkeit des Schlüsselaufsatzes erhöht. Die radiale Spielfreiheit sorgt dafür, dass der erste Wellenabschnitt stets wieder in seine Ausgangslage zurückkehrt. Mit der Formulierung "im Wesentlichen" soll deutlich gemacht werden, dass zwar eine radiale Spielfreiheit angestrebt wird, dass aber im Rahmen dieser Ausführungsform ein Einstecken und eine Entnahme des Federelements möglich sein soll.

Im Folgenden wird die Erfindung anhand von bevorzugten Ausführungsbeispielen im Zusammenhang mit der anhängenden Zeichnung näher erläutert. In den Figuren sind Elemente mit gleicher oder vergleichbarer Funktion aus Übersichtsgründen mit identischen Bezugszeichen versehen und nur einmal eingehender beschrieben. Die Zeichnung zeigt in
- Figur 1: in schematischer Darstellung eine perspektivische Ansicht eines ersten Ausführungsbeispiels eines erfindungsgemäßen Schlüsselaufsatzes,
- Figur 2: in schematischer Darstellung einen Längsschnitt des Schlüsselaufsatzes nach Figur 1,
- Figur 3: in schematischer Darstellung eine perspektivische Ansicht einer Kreuzscheibe des Schlüsselaufsatzes nach Figur 1,
- Figur 4: in schematischer Darstellung eine perspektivische Ansicht des zweiten Wellenabschnitts des Schlüsselaufsatzes nach Figur 1,
- Figur 5: in schematischer Darstellung eine perspektivische Ansicht des ersten Wellenabschnitts des Schlüsselaufsatzes nach Figur 1,
- Figur 6: in schematischer Darstellung eine perspektivische Ansicht eines zweiten Ausführungsbeispiels eines erfindungsgemäßen Schlüsselaufsatzes,
- Figur 7: in schematischer Darstellung einen Teillängsschnitt des Schlüsselaufsatzes nach Figur 6,
- Figur 8: in schematischer Darstellung eine perspektivische Ansicht eines dritten Ausführungsbeispiels eines erfindungsgemäßen Schlüsselsaufsatzes, und
- Figur 9: in schematischer Darstellung einen Teillängsschnitt des Schlüsselaufsatzes nach Figur 8.

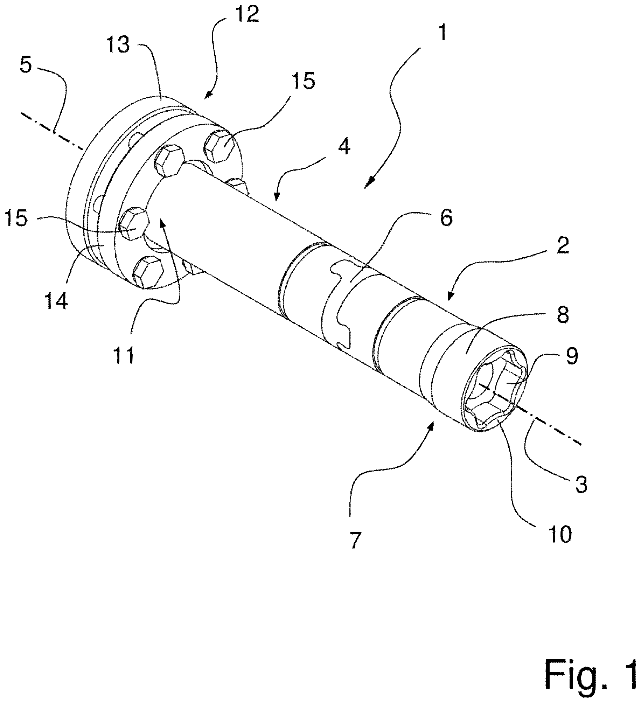

Figur 1 zeigt eine perspektivische Ansicht eines ersten Ausführungsbeispiels des erfindungsgemäßen Schlüsselaufsatzes 1. Der Schlüsselaufsatz umfasst einen ersten Wellenabschnitt 2 mit einer ersten Längsachse 3 und einen zweiten Wellenabschnitt 4 mit einer zweiten Längsachse 5, wobei der erste und der zweite Wellenabschnitt 2, 4 mittels einer Kreuzscheibe 6 gekoppelt sind. Eine derartige Kreuzscheibe ist auch von einer Kreuzscheibenkupplung bekannt. Durch die Kreuzscheibe 6 ist ein radialer Versatz zwischen dem ersten Wellenabschnitt 2 und dem zweiten Wellenabschnitt 4 ausgleichbar. Dies bedeutet, dass der erste Wellenabschnitt 2 auch bei einem Achsversatz zu dem zweitem Wellenabschnitt 4 in der Lage ist, ein spannungsfreies Drehmoment aufzubringen und eine Verschraubung ohne Verklemmen zu gewährleisten.

Der erste Wellenabschnitt 2 weist an seinem freien Ende 7 einen profilierten Schlüssel 8 zur Betätigung von hier nicht dargestellten (Justier-)Schrauben auf. Hierbei handelt es sich insbesondere um Schrauben zur Einstellung einer Breitschlitzdüse und/oder eines Staubalkens einer Vorrichtung zur Herstellung flachbahniger Erzeugnisse mittels einer automatisierten Schraubeinrichtung. Bei dieser Vorrichtung zur Herstellung flachbahniger Erzeugnisse kann es sich zum Beispiel um eine Folienextrusionsanlage oder dergleichen handeln. Der erfindungsgemäße Schlüsselaufsatz ist auf diese Anwendung jedoch nicht beschränkt. Der Schlüssel 8 verfügt über ein vorzugsweise mehrkantiges Profil 9 sowie einen endseitigen, umlaufenden Zentrierkonus 10 zur Selbstzentrierung auf den Köpfen der einzustellenden Schrauben. Grundsätzlich kann der Schlüssel 8 in Abhängigkeit von der jeweiligen Geometrie des Schraubenkopfes über ein beliebiges, vorzugsweise mehrkantiges, Innen- oder Außenprofil verfügen. Bei dem Zentrierkonus 10 handelt es sich um eine umlaufende Fase, die je nach Ausgestaltung des Schlüsselprofils 9 innen oder außen angeordnet ist.

An dieser Stelle sei darauf hingewiesen, dass der erfindungsgemäße Schlüsselaufsatz nicht nur für Schrauben geeignet ist, sondern auch für Muttern.

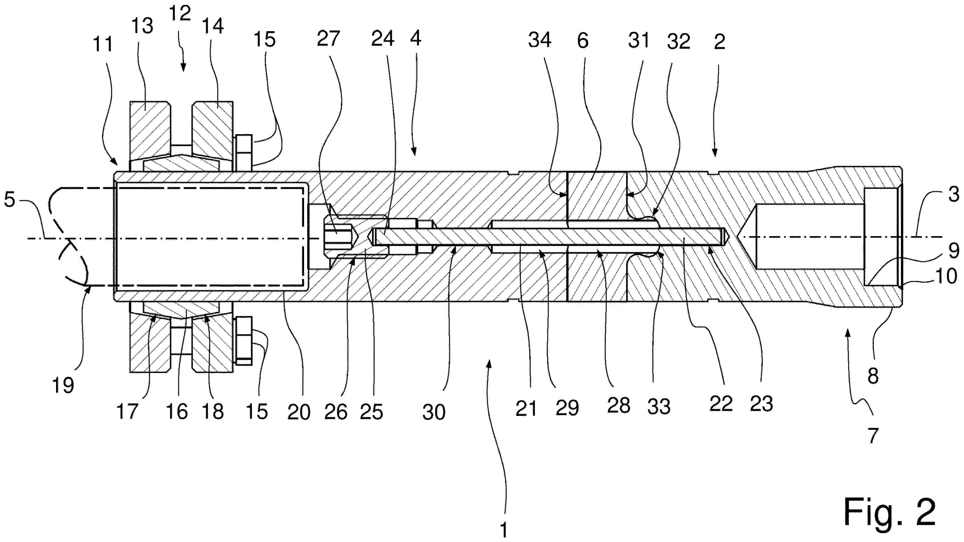

Der zweite Wellenabschnitt 4 weist ein rückwärtiges Ende 11 auf, das in einer Aufnahmeeinheit 12 aufgenommen ist. Die Aufnahmeeinheit 12 ist bevorzugt als gesonderte Einheit ausgebildet und weist einen ersten und einen zweiten Befestigungsring 13, 14 auf, die über Schrauben 15 axial gegeneinander verspannbar sind. Hierdurch kann der erfindungsgemäße Schlüsselaufsatz 1 auf einer Antriebswelle fixiert werden, wie es im Zusammenhang mit Figur 2 noch näher erläutert wird.

Figur 2 zeigt einen Längsschnitt des Schlüsselaufsatzes 1 nach Figur 1. Aus dieser Schnittansicht wird deutlich, dass die erste Längsachse 3 des ersten Wellenabschnitts 2 sowie die zweite Längsachse 5 des zweiten Wellenabschnitts 4 in der hier dargestellten - unbelasteten - Ausgangsstellung koaxial zueinander ausgerichtet sind.

Aus Figur 2 wird ferner der Aufbau der Aufnahmeeinheit 12 deutlich. Die beiden Befestigungsringe 13, 14 sind über die Schrauben 15 axial gegeneinander verspannbar und sitzen auf einer Klemmhülse 16, die zwei gegenläufige konische Flächen 17, 18 aufweist. Wenn die Schrauben 15 angezogen werden, bewegen sich die beiden Befestigungsringe 13, 14 aufeinander zu und spannen zwischen sich die Klemmhülse 16 ein. Aufgrund der beiden konischen Flächen 17, 18 reduziert sich dabei der Durchmesser der Klemmhülse 16, so dass Druck auf den zweiten Wellenabschnitt 4 ausgeübt wird.

Mit dem Bezugszeichen 19 ist eine Antriebswelle zum Beispiel eines Motors oder eines Getriebes strich-liniert angedeutet, der in einer Aufnahme 20 des zweiten Wellabschnitts 4 aufgenommen ist. Die Aufnahme 20 gestattet es, dass der erfindungsgemäße Schlüsselaufsatz 1 direkt auf die Antriebswelle 19 steckbar und dort fixierbar ist. Bei einem Anziehen der Schrauben 15 wird wie vorstehend erläutert Druck auf den zweiten Wellenabschnitt 4 ausgeübt, so dass der zweite Wellenabschnitt 4 in der Aufnahme 20 verspannt wird. Damit die Klemmkraft des die Aufnahme 20 bildenden Teils des zweiten Wellenabschnitts 4 auf die Antriebwelle 19 übertragen werden kann, ist vorteilhafterweise an dem rückwärtigen Ende 11 des zweiten Wellenabschnitts 4 mindestens ein (hier nicht dargestellter) Schlitz, vorzugsweise mindestens ein Längsschlitz, vorgesehen. Dies ermöglicht besonders vorteilhaft, dass der Durchmesser der Aufnahme 20 zur Verspannung der Antriebswelle 19 verkleinert werden kann. Auch eine Ausbildung der Aufnahme 20 ohne Schlitz ist möglich und vorteilhaft.

Der erste Wellenabschnitt 2 und der zweite Wellenabschnitt 4 sind durch ein Federelement 21 miteinander verbunden. Das Federelement 21 sorgt dafür, dass der erste Wellenabschnitt 2 im unbelasteten Zustand mit dem zweiten Wellenabschnitt 4 fluchtet. In dieser Stellung sind die Längsachsen 3, 5 der Wellenabschnitte 2, 4 koaxial zueinander ausgerichtet.

Das Federelement 21 ist bevorzugt als ein linearer Federstab ausgebildet. Der Querschnitt des Federstabs ist bevorzugt rund, kann aber auch eckig, beispielsweise quadratisch ausgebildet sein. Als Material kommt z.B. Federstahl in Betracht.

Das Federelement 21 ist im unbelasteten Zustand gemäß Figur 2 konzentrisch zu den Längsachsen 3, 5 der Wellenabschnitte 2, 4 angeordnet. Die Längsachsen 3, 5 sowie das Federelement 21 liegen also vorteilhaft auf einer gemeinsamen Achse. Mit einem Ende 22 ist das Federelement 21 in den ersten Wellenabschnitt 2 eingesteckt. Hierzu weist der erste Wellenabschnitt 2 eine Bohrung 23 auf.

Das andere Ende 24 des Federelements 21 ist in einer Schraube 25 aufgenommen, die mit dem zweiten Wellenabschnitt 4 im Gewindeeingriff steht. Zu diesem Zweck weist der zweite Wellenabschnitt 4 ein Innengewinde 26 auf, in das die Schraube 25 im montierten Zustand eingeschraubt ist. Zur Betätigung der Schraube 25 ist diese vorteilhaft mit einem Profil 27, beispielsweise einem Innensechskant versehen. Das Federelement 21 ist in die Schraube 25 eingeklebt, eingepresst oder eingelötet. Es kann auch in die Schraube 25 eingeschraubt sein. Dann weist das Federelement 21 ein Außengewinde auf.

Zur Montage des erfindungsgemäßen Schlüsselaufsatzes 1 werden zunächst der erste und der zweite Wellenabschnitt 2, 4 mit der Kreuzscheibe 6 so zusammengefügt, dass sie fluchten. Sodann wird das Federelement 21 durch das rückwärtige Ende 11 des zweiten Wellenabschnitts 4 hindurch sowie durch die Kreuzscheibe 6 in den ersten Wellenabschnitt 2 gesteckt, der hierzu vorzugsweise eine Bohrung 23 aufweist, wie es zuvor bereits beschrieben worden ist. Zur Fixierung des Federelements 21 wird die Schraube 25 mittels des Profils 27 in den zweiten Wellenabschnitt 4 eingeschraubt. Die Verschraubung kann zusätzlich durch eine Verklebung gesichert werden.

Das Federelement 21 ist in der Schraube 25 fest aufgenommen, also axial in dem zweiten Wellenabschnitt 4 fixiert. Das Ende 22 des Federelements 21 sitzt in dem ersten Wellenabschnitt 2 axial verschieblich und in radialer Richtung im Wesentlichen spielfrei. Im unbelasteten Zustand des Schlüsselaufsatzes 1 richtet das Federelement 21 also den ersten Wellenabschnitt 2 und den zweiten Wellenabschnitt 4 koaxial aus. Gleichzeitig ist vorteilhafterweise das Federelement 21 in den ersten Wellenabschnitt 2 zur Montage einsteckbar und zur Demontage lösbar, also vorzugsweise axial verschieblich.

Damit das Federelement 21 durch die Kreuzscheibe 6 hindurchgreifen kann, weist diese vorzugsweise eine Durchgangsöffnung 28 auf. Auch der zweite Wellenabschnitt 4 weist vorzugsweise eine Durchgangsöffnung 29 auf. Die Bohrung 23 in dem ersten Wellenabschnitt 2 kann als Sacklochbohrung ausgebildet sein.

Der erfindungsgemäße Schlüsselaufsatz 1 gestattet aufgrund der Kreuzscheibe 6 einen radialen Achsversatz des ersten Wellenabschnitts 2 gegenüber dem zweiten Wellenabschnitt 4. Die beiden Längsachsen 3, 5 sind dann nicht mehr koaxial, sondern parallel. Damit eine Auslenkung des ersten Wellenabschnitts 2 gegenüber dem zweiten Wellenabschnitt 4 möglich ist, weist die Durchgangsöffnung 28 der Kreuzscheibe 6 einen größeren Querschnitt auf als das Federelement 21. Mit anderen Worten bietet die Durchgangsöffnung 28 gegenüber dem Federelement 21 ein radiales Spiel, damit auch das Federelement 21 auslenken kann. Um dem Federelement 21 noch mehr radiale Flexibilität einzuräumen, kann zusätzlich auch die Durchgangsöffnung 29 des zweiten Wellenabschnitts 4 einen größeren Querschnitt aufweisen als das Federelement 21. Um gleichwohl das Federelement 21 in dem zweiten Wellenabschnitt 4 zu zentrieren, ist das Federelement 21 in einer Zentrieröffnung 30 des zweiten Wellenabschnitts 4 im Wesentlichen spielfrei gehalten. Dies bedeutet, dass das Federelement zwar durch die Zentrieröffnung 30 hindurchgesteckt werden kann, letztere aber ein möglichst geringes radiales Spiel zur Verfügung stellt, um die Zentrierfunktion zu erfüllen.

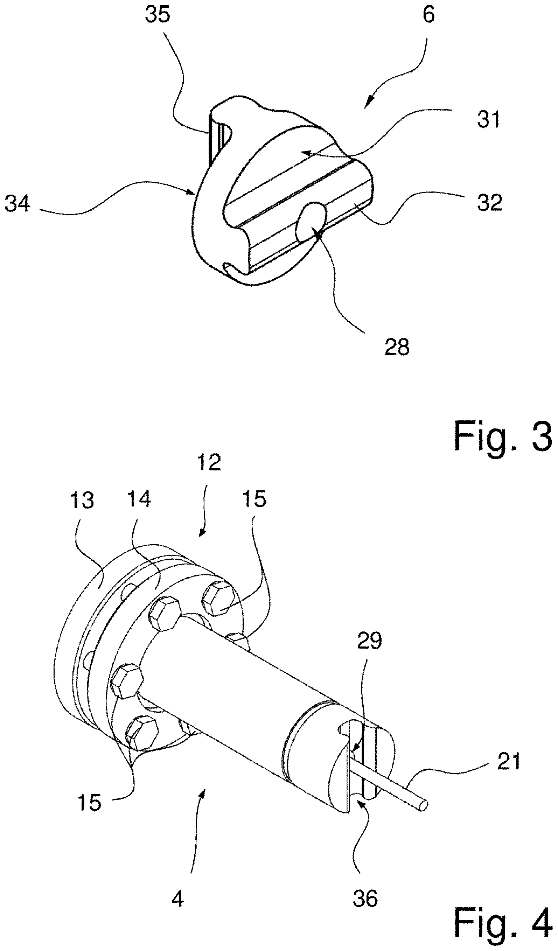

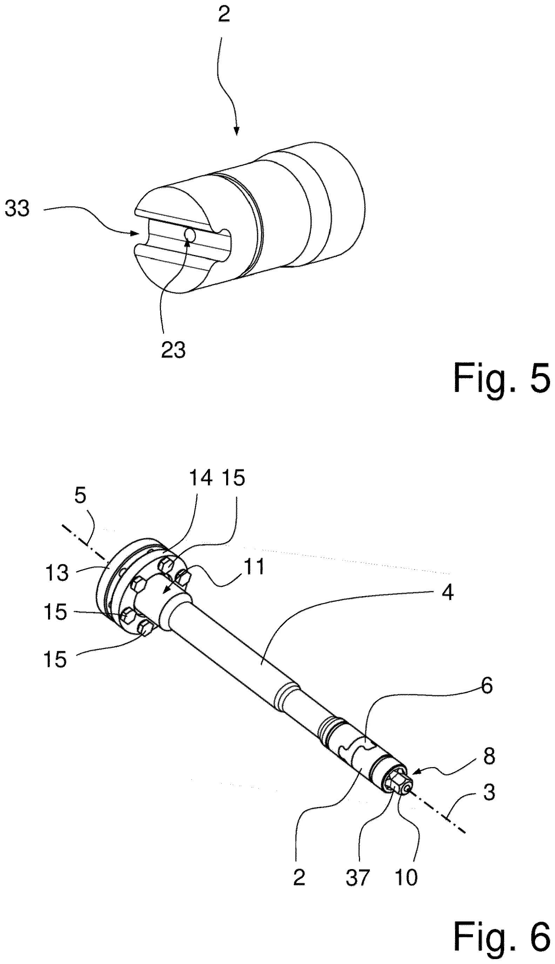

Im Folgenden wird die Anordnung der Kreuzscheibe 6 zwischen dem ersten und dem zweiten Wellenabschnitt 2, 4 beschrieben und hierzu auf die Figuren 2 bis 5 Bezug genommen. Figur 2 zeigt in einem Schnitt den montierten Schlüsselaufsatz 1. Figur 3 zeigt die Kreuzscheibe 6 in Alleinstellung. Figur 4 zeigt den zweiten Wellenabschnitt 4 in Alleinstellung (allerdings mit der Aufnahmeeinheit 12). Figur 5 zeigt den ersten Wellenabschnitt 2 in Alleinstellung.

Die Kreuzscheibe 6 weist auf einer dem ersten Wellenabschnitt 2 zugewandten ersten Seite 31 eine erste Feder 32 auf, die in eine erste Nut 33 des ersten Wellenabschnitts 2 (siehe Figur 5) eingreift. Auf einer der ersten Seite 31 abgewandten zweiten Seite 34 der Kreuzscheibe 6 ist eine orthogonal zur ersten Feder 32 angeordnete zweite Feder 35 ausgeformt, die in eine zweite Nut 36 eingreift, welche im zweiten Wellenabschnitt 4 (siehe Figur 4) ausgebildet ist.

Die Nuten 33, 36 der Wellenabschnitte 2, 4 sind komplementär zu den Federn 32, 35 der Kreuzscheibe 6 ausgebildet, um einen zumindest bereichsweisen und hinterschnittenen Formschluss zu ermöglichen. Es versteht sich, dass der Formschluss so beschaffen ist, dass die Federn 32, 35 in den zugehörigen Nuten 33, 36 beweglich sind.

Von Bedeutung ist, dass die Nuten 33, 36 der Wellenabschnitte 2, 4 so ausgebildet sind, dass die Wellenabschnitte 2, 4 die jeweiligen Federn 32, 35 hintergreifen. Bei dem vorliegenden Ausführungsbeispiel sind die Federn 32, 35 der Kreuzscheibe 6 und die zugehörigen Nuten 33, 36 der Wellenabschnitte 2, 4 im Querschnitt puzzleartig ausgebildet. Durch den vorstehend dargestellten formschlüssigen Eingriff kann die Kreuzscheibe 6 sowohl Druckkräfte als auch insbesondere Zugkräfte zwischen den beiden Wellenabschnitten 2, 4 übertragen, so dass sich der Schlüssel 8 am Ende eines automatisierten Einstellvorgangs problemlos vom Kopf einer eingestellten Schraube abziehen lässt.

In Figur 3 ist ferner gut zu erkennen, dass die Kreuzscheibe 6 eine zentrale Durchgangsöffnung 28 aufweist. Diese ist vorzugsweise größer als das Federelement 21 ausgebildet, lässt dem Federelement 21 also radialen Bewegungsspielraum. Die Federn 32, 35 sind rechtwinklig zueinander orientiert, das heißt in Relation zu der Durchgangsöffnung 28 um 90° zueinander verdreht ausgebildet.

In Figur 4 ist ebenfalls gut zu sehen, dass der zweite Wellenabschnitt 4 eine Durchgangsöffnung 29 aufweist, durch die das Federelement 21 hindurchgreift. Vorzugsweise weist auch diese Durchgangsöffnung 29 zumindest an dem an die Kreuzscheibe 6 angrenzenden Ende einen größeren Querschnitt auf als das Federelement 21, so dass das Federelement 21 einen radialen Bewegungsspielraum hat.

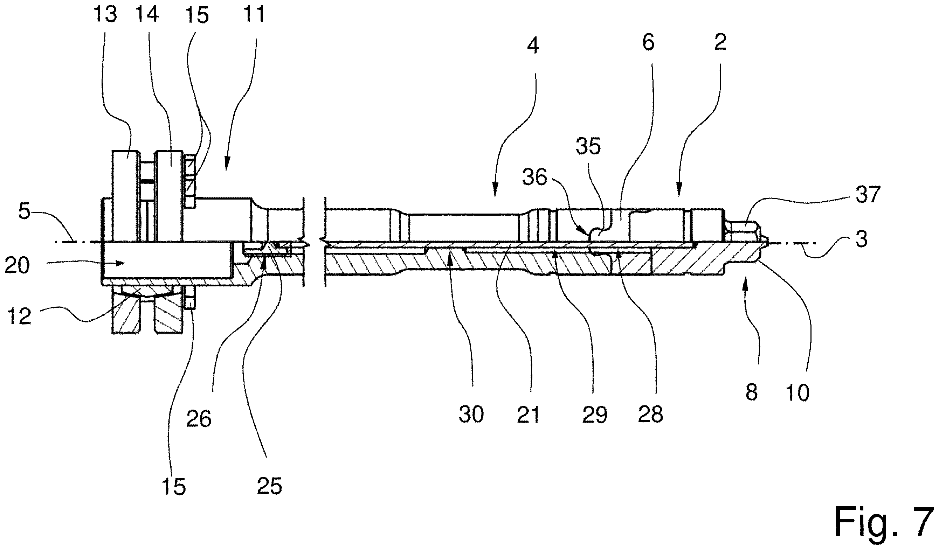

Figuren 6 und 7 zeigen ein zweites Ausführungsbeispiel des erfindungsgemäßen Schlüsselaufsatzes.

Ein wesentlicher Unterschied zu dem ersten Ausführungsbeispiel besteht darin, dass der Schlüssel 8 nicht als Nuss mit einem Innenprofil ausgebildet ist, sondern ein Außenprofil 37 aufweist, welches vorliegend als Außensechskant ausgebildet ist. Auch dieser Schlüssel 8 bildet einen Zentrierkonus 10. Damit kann der Schlüssel 8 auch dann sicher in eine (hier nicht gezeigte) Schraube eingeführt werden, wenn ein geringer radialer Achsversatz gegeben ist.

Ein weiterer Unterschied zu dem ersten Ausführungsbeispiel besteht darin, dass das zweite Ausführungsbeispiel mit einem längeren zweiten Wellenabschnitt 4 ausgebildet ist. Hierdurch ist der Schlüsselaufsatz in der Lage, auch weite Distanzen zwischen einer Schraubeinrichtung und der einzustellenden Schraube zu überbrücken. In diesem Zusammenhang kommt der Zentrieröffnung 30 eine besondere Bedeutung zu. Sie sorgt dafür, dass das Federelement 21 - das auch hier vorzugsweise als Federstab ausgebildet ist - innerhalb des zweiten Wellenabschnitts 4 abgestützt ist, damit das Federelement 21 auch bei einem längeren zweiten Wellenabschnitt 4 eine ausreichende Federkraft und eine zuverlässige Zentrierfunktion zur Verfügung stellen kann. Im Übrigen wird zur weiteren Beschreibung auf das erste Ausführungsbeispiel verwiesen.

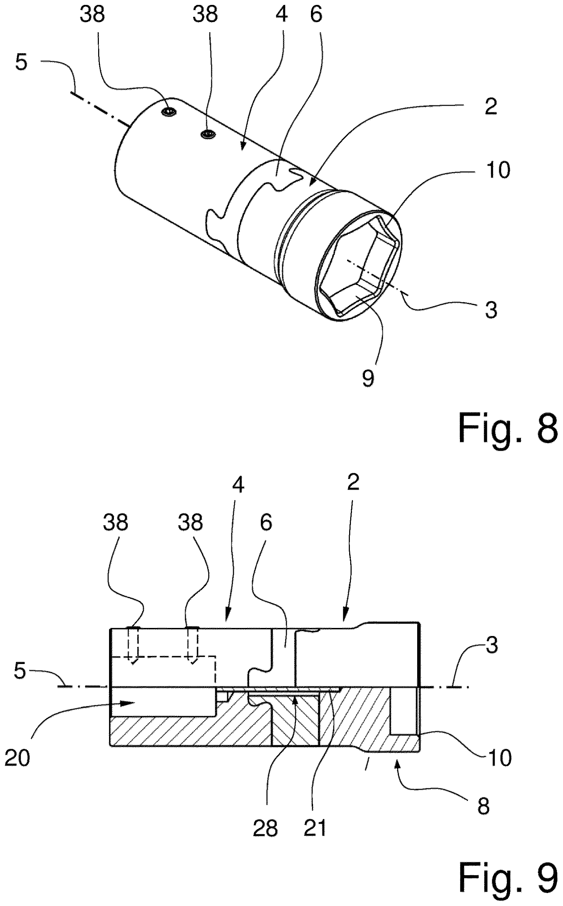

Figuren 8 und 9 zeigen ein drittes Ausführungsbeispiel des erfindungsgemäßen Schlüsselaufsatzes. Dieses Ausführungsbeispiel ist gegenüber dem ersten und dem zweiten Ausführungsbeispiel in Längsrichtung deutlich kürzer. Während die Kreuzscheibe 6 eine Durchgangsöffnung 28 aufweist, die gegenüber dem Federelement 21 einen größeren Querschnitt aufweist, ist der zweite Wellenabschnitt 4 nicht mit einer erweiterten Durchgangsöffnung 29 (siehe Figuren 2 und 7) ausgestattet. Auch weist dieses Ausführungsbeispiel keine Schraube 25 auf. Vielmehr ist das Federelement 21 unmittelbar in den zweiten Wellenabschnitt 4 eingepresst, eingeklebt oder eingelötet. Allen Ausführungsbeispielen gemein ist, dass der zweite Wellenabschnitt 4 eine Aufnahme 20 zur Aufnahme einer Antriebswelle aufweist. Die (nicht gezeigte) Antriebswelle wird mittels Madenschrauben 38 befestigt. Im Übrigen wird auf die Beschreibung der anderen beiden Ausführungsbeispiele verwiesen.

### Bezugszeichenliste

- 1: Schlüsselaufsatz
- 2: erster Wellenabschnitt
- 3: Längsachse
- 4: zweiter Wellenabschnitt
- 5: Längsachse
- 6: Kreuzscheibe
- 7: freies Ende
- 8: Schlüssel
- 9: Profil
- 10: Zentrierkonus
- 11: rückwärtiges Ende
- 12: Aufnahmeeinheit
- 13: Befestigungsring
- 14: Befestigungsring
- 15: Schraube
- 16: Klemmhülse
- 17: konische Fläche
- 18: konische Fläche
- 19: Antriebswelle
- 20: Aufnahme
- 21: Federelement
- 22: Ende
- 23: Bohrung
- 24: Ende
- 25: Schraube
- 26: Innengewinde
- 27: Profil
- 28: Durchgangsöffnung
- 29: Durchgangsöffnung
- 30: Zentrieröffnung
- 31: erste Seite
- 32: erste Feder
- 33: erste Nut
- 34: zweite Seite
- 35: zweite Feder
- 36: zweite Nut
- 37: Außenprofil
- 38: Madenschraube

## Patentansprüche

1. Schlüsselaufsatz (1) für Schrauben, mit
- einem ersten Wellenabschnitt (2) mit einer ersten Längsachse (3), und mit
- einem zweiten Wellenabschnitt (4) mit einer zweiten Längsachse (5),
- wobei der erste Wellenabschnitt (2) ein freies Ende (7) zur Betätigung der Schrauben aufweist,
**dadurch gekennzeichnet,**
- **dass** der zweite Wellenabschnitt (4) mit dem ersten Wellenabschnitt (2) über eine Kreuzscheibe (6) gekoppelt ist, durch die ein radialer Versatz zwischen dem ersten Wellenabschnitt (2) und dem zweiten Wellenabschnitt (4) ausgleichbar ist, und
- **dass** der erste Wellenabschnitt (2) und der zweite Wellenabschnitt (4) durch ein Federelement (21) miteinander verbunden sind, das den ersten Wellenabschnitt (2) in eine Ausgangsstellung ausrichtet, in der die erste Längsachse (3) und die zweite Längsachse (5) koaxial fluchten.

2. Schlüsselaufsatz nach Anspruch 1, **dadurch gekennzeichnet, dass** das Federelement (21) innerhalb des ersten und des zweiten Wellenabschnitts (2; 4) angeordnet ist.

3. Schlüsselaufsatz nach Anspruch 1 oder 2, **dadurch gekennzeichnet, dass** das Federelement (21) als linearer Federstab ausgebildet ist.

4. Schlüsselaufsatz nach einem der Ansprüche 1 bis 3, **dadurch gekennzeichnet, dass** die Kreuzscheibe (6) eine zentrale Durchgangsöffnung (28) aufweist, durch die das Federelement (21) hindurchgeht.

5. Schlüsselaufsatz nach Anspruch 4, **dadurch gekennzeichnet, dass** die Durchgangsöffnung (28) einen größeren Öffnungsquerschnitt aufweist als der Querschnitt des Federelements (21), wobei vorzugsweise der Öffnungsquerschnitt rund ausgebildet ist.

6. Schlüsselaufsatz nach einem der Ansprüche 1 bis 5, **dadurch gekennzeichnet, dass** der zweite Wellenabschnitt (4) ein rückwärtiges Ende (11) aufweist, durch das hindurch das Federelement (21) eingesteckt ist.

7. Schüsselaufsatz nach Anspruch 6, **dadurch gekennzeichnet, dass** das Federelement (21) mit einer Schraube (25) verbunden ist, die mit dem zweiten Wellenabschnitt (4) in Gewindeeingriff steht.

8. Schlüsselaufsatz nach einem der Ansprüche 1 bis 7, **dadurch gekennzeichnet, dass** die Kreuzscheibe (6) auf einer Seite (31) eine erste Feder (32), die in eine erste Nut (33) des ersten Wellenabschnitts (2) eingreift, und auf einer anderen Seite (34) eine zweite Feder (35) aufweist, die in eine zweite Nut (36) des zweiten Wellenabschnitts (4) eingreift, wobei vorzugsweise die erste und die zweite Feder (32; 35) orthogonal zueinander angeordnet sind.

9. Schlüsselaufsatz nach Anspruch 8, **dadurch gekennzeichnet, dass** die erste und die zweite Feder (32; 35) in den ersten und den zweiten Wellenabschnitt (2; 4) derart eingreifen, dass der erste und der zweite Wellenabschnitt (2; 4) in Richtung der ersten und der zweiten Längsachse (3; 5) zugfest miteinander verbunden sind.

10. Schlüsselaufsatz nach einem der Ansprüche 1 bis 9, **dadurch gekennzeichnet, dass** der zweite Wellenabschnitt (4) in einer Aufnahmeeinheit (12) aufgenommen ist, die einen ersten Befestigungsring (13) und einen zweiten Befestigungsring (14) aufweist, wobei der erste und der zweite Befestigungsring abstandsveränderlich miteinander verbunden sind und auf einer Klemmhülse (16) sitzen, in der der zweite Wellenabschnitt (4) aufgenommen ist.

11. Schlüsselaufsatz nach einem der Ansprüche 1 bis 10, **dadurch gekennzeichnet, dass** der zweite Wellenabschnitt (4) an seinem rückwärtigen Ende (11) eine Aufnahme (20) zur Aufnahme einer Antriebswelle aufweist.

12. Schlüsselaufsatz nach einem der Ansprüche 1 bis 11, **dadurch gekennzeichnet, dass** der erste Wellenabschnitt (2) einen profilierten Schlüssel (8) mit einem endseitigen umlaufenden Zentrierkonus (10) aufweist.

13. Schlüsselaufsatz nach einem der Ansprüche 1 bis 12, **dadurch gekennzeichnet, dass** der Schlüssel (8) ein mehrkantiges Innenprofil oder ein mehrkantiges Außenprofil aufweist.

## Claims

1. Wrench attachment (1) for screws, having
- a first shaft portion (2) having a first longitudinal axis (3); and having
- a second shaft portion (4) having a second longitudinal axis (5);
- wherein the first shaft portion (2) has a free end (7) for activating the screws,
**characterized in that**
- the second shaft portion (4) is coupled to the first shaft portion (2) by way of a cross disc (6) by way of which a radial offset between the first shaft portion (2) and the second shaft portion (4) is able to be compensated; and
- the first shaft portion (2) and the second shaft portion (4) are connected to one another by a spring element (21) which aligns the first shaft portion (2) to an initial position in which the first longitudinal axis (3) and the second longitudinal axis (5) are co-aligned to be coaxial.

2. Wrench attachment according to Claim 1, **characterized in that** the spring element (21) is disposed within the first and the second shaft portion (2; 4).

3. Wrench attachment according to Claim 1 or 2, **characterized in that** the spring element (21) is designed as a linear spring rod.

4. Wrench attachment according to one of Claims 1 to 3, **characterized in that** the cross disc (6) has a central through-opening (28) through which the spring element (21) passes.

5. Wrench attachment according to Claim 4, **characterized in that** the through-opening (28) has a larger opening cross section than the cross section of the spring element (21), wherein the opening cross section is preferably designed to be round.

6. Wrench attachment according to one of Claims 1 to 5, **characterized in that** the second shaft portion (4) has a rearward end (11) through which the spring element (21) is inserted.

7. Wrench attachment according to Claim 6, **characterized in that** the spring element (21) is connected to a screw (25) which by way of a thread engages with the second shaft portion (4).

8. Wrench attachment according to one of Claims 1 to 7, **characterized in that** the cross disc (6) on one side (31) has a first spring (32) which engages in a first groove (33) of the first shaft portion (2), and on another side (34) has a second spring (35) which engages in a second groove (36) of the second shaft portion (4), wherein the first and the second spring (32; 35) preferably are disposed so as to be mutually orthogonal.

9. Wrench attachment according to Claim 8, **characterized in that** the first and the second spring (32; 35) engage in the first and the second shaft portion (2; 4) in such a manner that the first and the second shaft portion (2; 4) are connected to one another so as to guarantee tensile strength in the direction of the first and the second longitudinal axis (3; 5).

10. Wrench attachment according to one of Claims 1 to 9, **characterized in that** the second shaft portion (4) is received in a receptacle unit (12) which has a first fastening ring (13) and a second fastening ring (14), wherein the first and the second fastening ring are connected to one another at a variable spacing and sit on a first clamping sleeve (16) in which the second shaft portion (4) is received.

11. Wrench attachment according to one of Claims 1 to 10, **characterized in that** the second shaft portion (4) on the rearward end (11) thereof has a receptacle (20) for receiving a drive shaft.

12. Wrench attachment according to one of Claims 1 to 11, **characterized in that** the first shaft portion (2) has a profiled wrench (8) having an encircling centring cone (10) on the end side.

13. Wrench attachment according to one of Claims 1 to 12, **characterized in that** the wrench (8) has a polygonal internal profile or a polygonal external profile.

## Revendications

1. Embout de clé (1) pour vis, comportant
- une première partie d'arbre (2) présentant un premier axe longitudinal (3), et comportant
- une deuxième partie d'arbre (4) présentant un deuxième axe longitudinal (5),
- la première partie d'arbre (2) présentant une extrémité libre (7) servant à l'actionnement des vis, **caractérisé en ce que**
- la deuxième partie d'arbre (4) est accouplée à la première partie d'arbre (2) par le biais d'un disque à croix (6), par le biais duquel un décalage radial entre la première partie d'arbre (2) et la deuxième partie d'arbre (4) peut être compensé, et
- **en ce que** la première partie d'arbre (2) et la deuxième partie d'arbre (4) sont reliées l'une à l'autre par le biais d'un élément ressort (21) qui oriente la première partie d'arbre (2) dans une position de départ dans laquelle le premier axe longitudinal (3) et le deuxième axe longitudinal (5) sont alignés de manière coaxiale.

2. Embout de clé selon la revendication 1, **caractérisé en ce que** l'élément ressort (21) est disposé à l'intérieur de la première et de la deuxième partie d'arbre (2 ; 4).

3. Embout de clé selon la revendication 1 ou 2, **caractérisé en ce que** l'élément ressort (21) est réalisé sous forme de tige ressort linéaire.

4. Embout de clé selon l'une des revendications 1 à 3, **caractérisé en ce que** le disque à croix (6) présente une ouverture traversante centrale (28) à travers laquelle passe l'élément ressort (21).

5. Embout de clé selon la revendication 4, **caractérisé en ce que** l'ouverture traversante (28) présente une section transversale d'ouverture plus grande que la section transversale de l'élément ressort (21), de préférence la section transversale d'ouverture étant réalisée de manière circulaire.

6. Embout de clé selon l'une des revendications 1 à 5, **caractérisé en ce que** la deuxième partie d'arbre (4) présente une extrémité arrière (11) à travers laquelle l'élément ressort (21) est inséré.

7. Embout de clé selon la revendication 6, **caractérisé en ce que** l'élément ressort (21) est relié à une vis (25) qui est en prise par filetage avec la deuxième partie d'arbre (4).

8. Embout de clé selon l'une des revendications 1 à 7, **caractérisé en ce que** le disque à croix (6) présente, sur un côté (31), un premier ressort (32) qui vient en prise dans une première rainure (33) de la première partie d'arbre (2) et, sur un autre côté (34), un deuxième ressort (35) qui vient en prise dans une deuxième rainure (36) de la deuxième partie d'arbre (4), de préférence le premier et le deuxième ressort (32 ; 35) étant disposés orthogonalement l'un par rapport à l'autre.

9. Embout de clé selon la revendication 8, **caractérisé en ce que** le premier et le deuxième ressort (32 ; 35) viennent en prise dans la première et la deuxième partie d'arbre (2 ; 4) de telle sorte que la première et la deuxième partie d'arbre (2 ; 4) soient reliées l'une à l'autre de manière résistante à la traction dans la direction du premier et du deuxième axe longitudinal (3 ; 5).

10. Embout de clé selon l'une des revendications 1 à 9, **caractérisé en ce que** la deuxième partie d'arbre (4) est logée dans une unité de logement (12) qui présente une première bague de fixation (13) et une deuxième bague de fixation (14), la première et la deuxième bague de fixation étant reliées l'une à l'autre à une distance variable et reposant sur une douille de serrage (16) dans laquelle la deuxième partie d'arbre (4) est logée.

11. Embout de clé selon l'une des revendications 1 à 10, **caractérisé en ce que** la deuxième partie d'arbre (4) présente, à son extrémité arrière (11), un logement (20) servant au logement d'un arbre d'entraînement.

12. Embout de clé selon l'une des revendications 1 à 11, **caractérisé en ce que** la première partie d'arbre (2) présente une clef profilée (8) comportant un cône de centrage (10) périphérique du côté de son extrémité.

13. Embout de clé selon l'une des revendications 1 à 12, **caractérisé en ce que** la clé (8) présente un profil intérieur polygonal ou un profil extérieur polygonal.
